# EUROPEAN PATENT APPLICATION

(11) **EP 1 777 065 A1**
(43) Date of publication of application: **25.04.2007**
(21) Application number: 06253687.5
(22) Date of filing: 14.07.2006
(51) Int. Cl.: B32B 5/18

(54) **Multilayer material**

(30) Priority: 14.07.2005 GB 0514489
(71) Applicant: Green Light Products Ltd., London NW10 7XF (GB)
(72) Inventor: Song, Jin-Hua University of Brunel, Uxbridge UP8 3TH (GB); Kang, Yong-Gang University of Brunel, Uxbridge UP8 3TH (GB); Wang, Yong University of Brunel, Uxbridge UP8 3TH (GB); Gao, Yun-Xing University of Brunel, Uxbridge UP8 3TH (GB); Yeo, Bruce Edward University of Brunel, Uxbridge UP8 3TH (GB)
(74) Representative: Marlow, Nicholas Simon

(57) **Abstract**

A multilayer material 2 useful for packaging is disclosed, comprising a foam core 4 comprising compressed foamed starch 6 and a facing layer 8,10 bonded to a surface of the foam core. A method of making the multilayer material is also disclosed, comprising forming a core of foamed starch, compressing the foamed starch core and bonding a facing layer to a surface of the foamed starch core. Apparatus for making the multilayer material is also disclosed, comprising a first station for supplying foamed starch pieces to a transport surface, a second station, downstream of the first station, for applying a bonding agent to the surfaces of the foamed starch pieces, a compressor for compressing the foamed starch pieces downstream of the second station; and a bonder for bonding a facing layer to at least one surface of the compressed foamed starch.

## Description

The present invention relates to multilayer material comprising foamed starch, in particular biodegradable multilayer material, for example for use in thermal insulation, and to a method for the production thereof.

Biodegradable foamed starch products are known for use as packaging materials and provide an environmentally friendly alternative to traditional synthetic polymer foams such as expanded polystyrene (EPS) or foamed polyethylene, which are not readily degraded after use and are made from non-renewable petroleum resources. The manufacture of a biodegradable packaging comprising an ordered structure of lengths of foamed starch rod is disclosed in GB-A-2 352 230. This document discloses the adhesion bonding of lengths of foamed starch (such as wheat) rods formed by high temperature short time (HTST) extrusion cooking. Biodegradable packaging in the form of loose-fill chips can also be made from extruded starch (such as wheat). These foamed starch packaging materials are biodegradable and water soluble, making them readily disposable, and have comparable cushioning properties to other types of non degradable packaging, such as EPS chips.

It has been desired to expand the applications of foamed starch.

According to the present invention there is provided a multilayer material comprising: a foam core comprising compressed foamed starch; and a facing layer bonded to a surface of the foam core.

Preferably, the foamed starch is in the form of pieces of foamed starch, such as foamed starch loose-fill, and particularly preferably, the pieces are at least partially adhered together.

Foamed starch is biodegradable and the multilayer material is therefore substantially biodegradable, even if the facing material is non-biodegradable. Preferably, however, the facing material is biodegradable. The material of the present invention therefore provides an environmentally friendly alternative to non-biodegradable conventional EPS foams.

Foamed starch comprises starch, and optionally, additives such as plasticisers, for example polyvinyl alcohol, or nucleating agents, for example talc or bran. The starch may be unmodified starch. A currently preferred starch source for the preparation of foamed starch is wheat flour containing around 9% protein.

The multilayer material may comprise two facing layers bonded to opposing surfaces of the foam core, which may be of the same material as each other or of different materials. The combination of the foam layer with one or more facing layers can significantly enhance the mechanical and thermal insulation properties of the multilayer material. The facing layers may also provide additional desirable properties, such as moisture resistance, fire retardancy and a desired surface finish.

The facing material may be paper, (the term paper includes card, cardboard and other cellulose fibre based sheet material), or a biodegradable polymeric material such as starch film, polyvinyl alcohol, polylactic acid, polycaprolactone, polyester or materials containing any of these. The facing material may be a biodegradable material, such as those noted above, or a non-biodegradable material, such as polyethylene. Preferably, the facing material is corrugated card.

Preferably, the facing layer or layers are water resistant or comprise a water-resistant coating.

Also according to the present invention there is provided a method for making a multilayer material comprising:
a) forming a core of foamed starch;
b) compressing the foamed starch core; and
c) bonding a facing layer to a surface of the foamed starch core.

Preferably, the multilayer material is planar.

Preferably, the foamed starch core comprises foamed starch pieces, more preferably, the foamed starch pieces comprise foamed starch loose-fill.

Preferably, a bonding agent is applied to the surfaces of the foamed starch pieces.

Preferably the bonding agent is a liquid, more preferably water. Starch adhesives or latex based materials are also suitable.

The method may also comprise the step of bonding facing layers to opposing surfaces of the foam core and/or the step of applying a water-resistant coating to the facing layer or layers.

Also according to the invention there is provided apparatus for making a multilayer material comprising:
a first station for supplying foamed starch pieces to a transport surface;
a second station, downstream of the first station, for applying a bonding agent to the surfaces of the foamed starch pieces;
means for compressing the foamed starch pieces downstream of the second station; and
means for bonding a facing layer to at least one surface of the compressed foamed starch.

Preferably, the second station comprises a mist chamber.

Preferably, the means for compressing the foamed starch pieces comprises at least one roller or a hydraulic plate press.

An embodiment of the invention will now be described, by way of example, with reference to the accompanying drawings in which:
Figure 1 is a perspective view of a panel of biodegradable multilayer material according to the invention;
Figure 2 is a cross section through the panel of Figure 1;
Figure 3 is a schematic drawing of apparatus according to the invention, for the production of a multilayer material; and
Figures 4 to 7 show the results of a comparative experiment comparing the insulation properties of EPS foam with a multilayer panel according to the invention.

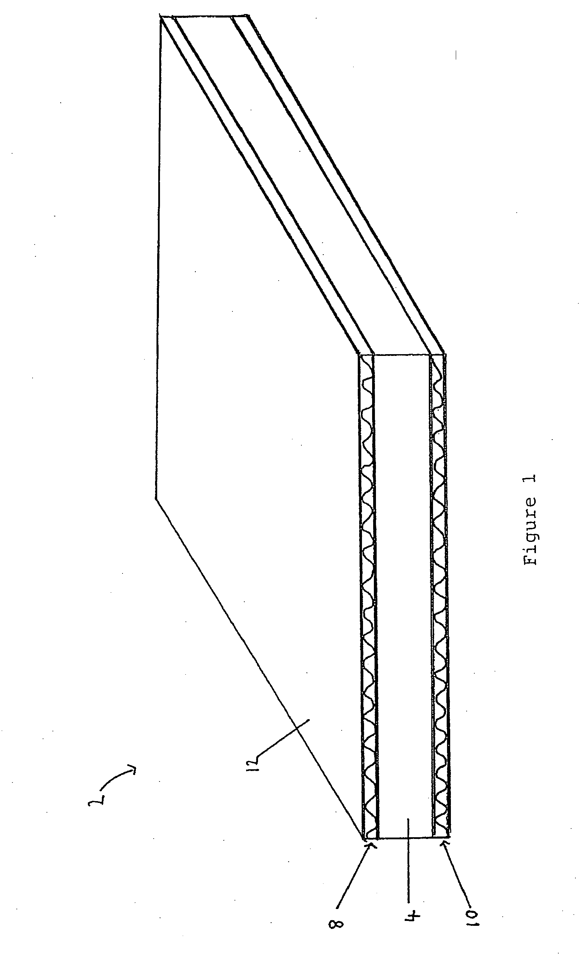

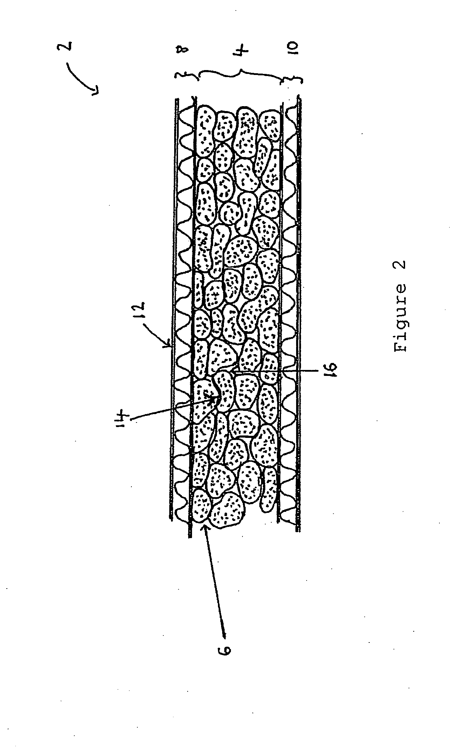

The biodegradable multilayer insulation panel 2 shown in Figures 1 and 2 comprises a foam core layer 4 of compressed foamed starch loose-fill 6, a first facing layer 8 bonded to the upper surface of the foam layer 4 and a second, identical facing layer 10 bonded to the opposing lower surface of the foam layer 4. The total thickness of the multilayer panel is around 100mm. Both facing layers 8,10 are corrugated cardboard and are coated with high hydrolysis polyvinyl alcohol 12, to provide a water-resistant external surface.

As shown in Figure 2, the foam core layer 4 has three components: the compressed loose-fill chips 6; the three dimensional network of interfaces 14 formed by fusion of the loose-fill chips 6 with each other at the contact areas; and the air pockets 16 between the loose-fill chips 6. At the interface regions the foamed starch is of a higher density and rigidity than elsewhere, reinforcing the foam core layer 4. The air pockets 16 contribute to the performance of the board as a thermal insulator.

To make the multilayer board 2, the foamed starch loose-fill 6 is formed by conventional HTST extrusion. The loose-fill chips 6 are transferred to a hopper 40, which releases metered amounts of the chips 6 onto a moving conveyor belt 42 having side walls 44. The thickness of the layer of loose-fill 6 and therefore of the foam core layer 4 is determined by the height of the conveyor belt side walls 44 and the speed of the belt 42 relative to the hopper 40. The foam core layer 4 is then formed by moistening the surfaces of the chips 6 with water in a mist chamber 46 and subjecting a layer of the moistened chips to compression. The water causes the surfaces of the chips 6 to become adhesive and this causes the surfaces to fuse together where they are in contact with each other. Compression may be applied by continuous rolling using rollers 48 on the chips 6 on the moving conveyor belt 42. Alternatively, (not shown), compression may be applied to the chips within a flat-bed mould using a hydraulic press comprising heavy duty plates. In the latter case, the chips are transferred from the moving conveyor belt into the mould before compression and the belt and the mould may be moveable in relation to each other, to ensure a uniform distribution of the chips in the mould. In order to achieve the desired density of the foam core, a force of up to 14,000N is applied during the compression step. The compression step can take place with or without heating.

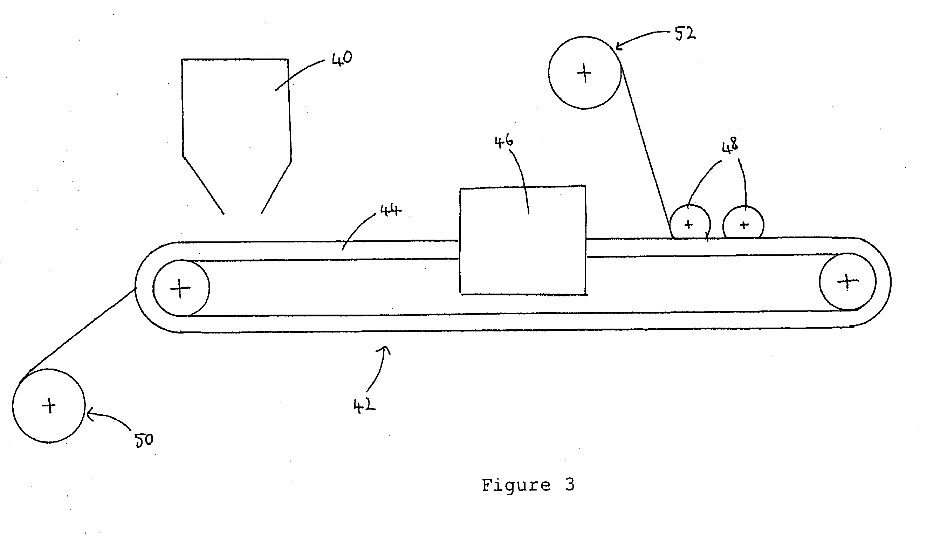

The first 10 and second 12 facing layers are bonded to the foam core layer 4 by applying moisture to the external surfaces of the foam core layer 4, making them adhesive. This avoids the need for the application of a separate adhesive between the foam 4 and facing layers 10,12 which can be employed if necessary. The desired facing layer or layers 10,12 may be positioned beneath and on top of the loose-fill prior to compression. In the apparatus shown in Figure 3, the first facing layer 8 from roller 50 is positioned on the surface of the conveyor belt 42 prior to deposition of the loose-fill from the hopper 40 and the second facing layer 10 from roller 52 is positioned on top of the deposited layer of loose-fill on the conveyor belt 42 prior to compression of the loose-fill layer by the rollers 48. The facing layer or layers may be coated with a water-resistant layer before use, or the final product may be coated with a water-resistant layer.

The process described may be easily adapted to produce a shaped body of the multilayer material instead of a planar board, by carrying out the compression step inside a mould cavity of the shape required.

The density of the bulk foam layer 4 can be varied by altering the degree of moistening, that is, the weight of water per unit surface area of the loose-fill chips and/or the compression pressure. The loose-fill in its uncompressed form has a density of between 6kgm⁻³ and 12kgm⁻³ and it has been found that optimal thermal insulating properties are obtained when the loose-fill is compressed to a density of between 15kgm⁻³ and 50kgm⁻³. The process described is, however, capable of producing a foam core layer with a density greater than 50kgm⁻³ if required.

Foamed starch loose-fill is particularly suitable for use in an insulation material. When the layer of loose-fill is compressed, air pockets are created between the chips of loose-fill, as shown in Figure 2. The distribution of air pockets throughout the foam core layer is irregular but relatively even throughout the material. The air pockets enhance the insulating performance of the material due to the poor heat conductivity of air. The compression of the core layer during manufacture tends to lead to the air pockets being closed, so that there are no, or only relatively few, open channels through the board which would allow for the creation of convection currents. This means that the transfer of heat through the board by means of conduction or convection is low. The thermal conductivity of the foam core layer 4 described is typically less than 0.035W/mK. This is comparable to conventional EPS insulation materials, which usually have a thermal conductivity in the range of 0.033W/mK to 0.036W/mK. The thermal conductivity of the corrugated card facing layers is also low, in the region of 0.045W/mK, depending on the density of the card.

### Comparative Example

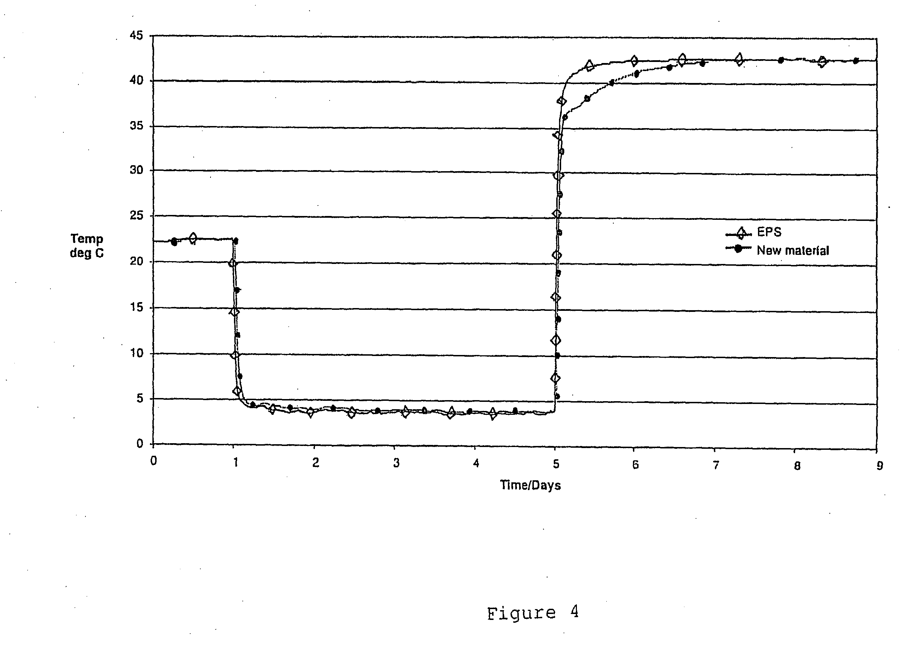

Figures 4 to 7 show the results of a comparison of the insulating properties of multilayer panel according to the present invention with conventional EPS insulation panel. For each material, an empty pallet box, with dimensions 1180mm x 780mm x 655 mm, was lined on all internal surfaces with 65mm thick panels of the material, having a density of around 20kgm⁻³, and the temperature at the centre of the pallet box was monitored at ten minute intervals throughout the following test sequence:
1) Holding the pallet in an environment at 23°C at 50% relative humidity for 24 hours; then
2) Holding the pallet in an environment at 3°C for 96 hours; then
3) Holding the pallet in an environment at 43°C for 96 hours.

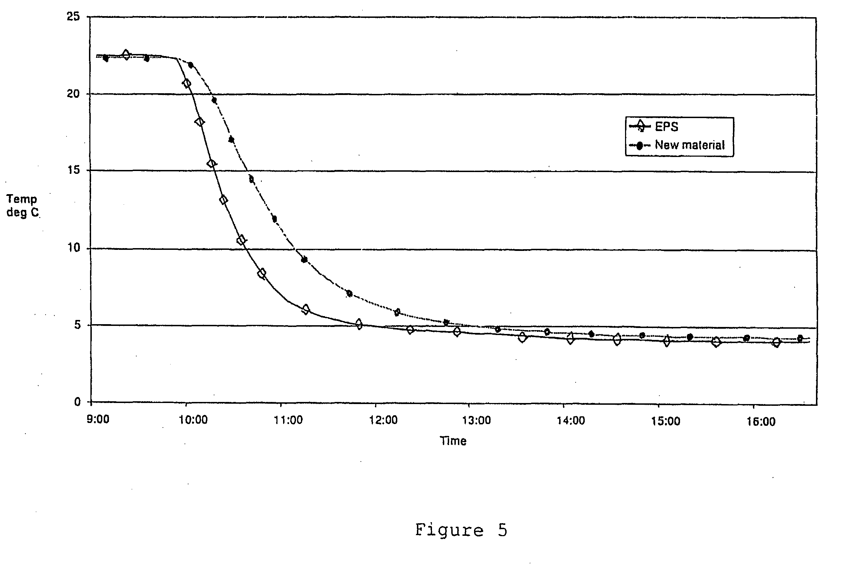

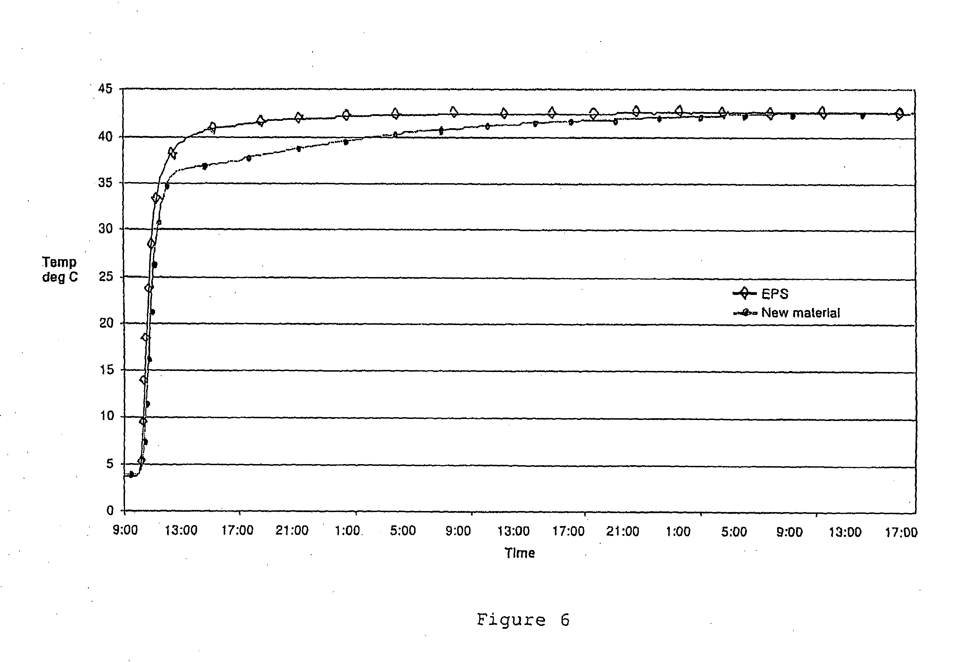

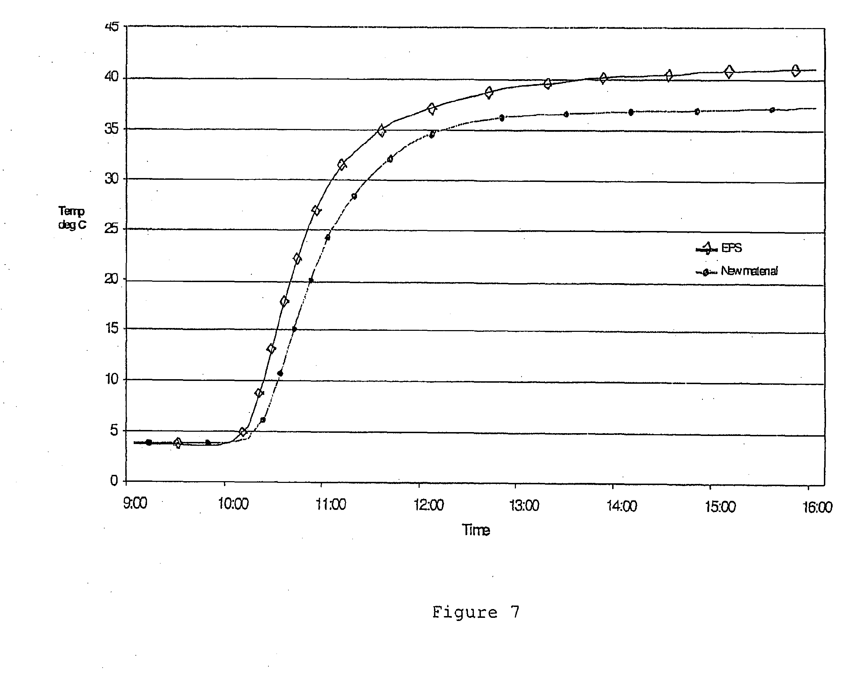

As can be seen from the graphs of Figures 4 to 7, the pallet box containing multilayer board according to the present invention shows a time lag in each of the temperature transitions compared to the EPS lined pallet box. In particular, Figure 4 shows the change in temperature over time inside each of the pallet boxes for the complete cycle, Figure 5 shows the ambient to cold transition, Figure 6 shows the complete cold to hot transition and Figure 7 shows the initial cold to hot transition. The results indicate that the multilayer panel provides improved thermal insulation over the conventional EPS insulation.

While in the embodiment described the foamed starch loose-fill chips 6 are fused with each other through the application of water to the surfaces of the chips, it will be appreciated that the chips could be adhered together in other ways, for example by the addition of a different bonding agent such as polyvinyl alcohol, latex, or a starch adhesive. Liquid bonding agents are preferred for ease of handling and control and may be non-aqueous or aqueous.

While in the embodiment described, the multilayer board comprises two identical facing layers of corrugated card, it will be appreciated that the two facing layers can be of different materials to each other and that in some cases a single facing layer may be sufficient. It will also be appreciated that the material of the facing layer can be chosen to suit the particular application of the panel. The facing layer or layers may be a paper material other than corrugated card, (with or without additives such as plasticisers), film or sheet materials based on biodegradable polymeric materials such as starch film, polyvinyl alcohol, polycaprolactone or polyester, or a non-biodegradable material such as polyethylene. Alternatively, the facing layer may be provided by encapsulating the foam layer with a thin film so that the foam layer is sealed inside the facing layer.

It will also be appreciated that, while in the embodiment described, the water-resistant coating is high hydrolysis polyvinyl alcohol, other water-resistant materials may provide suitable alternatives.

This invention provides an at least substantially biodegradable multilayer material, for example for use as in thermal insulation. The material finds particular application in the transport or storage of chilled objects, as a result of the combination of the thermal insulation properties and the suitability of foamed starch products as packaging materials.

## Claims

1. Multilayer material comprising:
a foam core comprising compressed foamed starch; and
a facing layer bonded to a surface of the foam core.

2. Multilayer material according to claim 1 wherein the foam core comprises a plurality of foamed starch pieces, such as foamed starch loose-fill.

3. Multilayer material according to claim 2 or 3 wherein the pieces are at least partially adhered together.

4. Multilayer material according to any preceding claim wherein the foamed starch is extruded starch.

5. Multilayer material according to any preceding claim comprising facing layers bonded to the opposing principal surfaces of the foam core.

6. Multilayer material according to claim 5 wherein the facing layers are of the same material.

7. Multilayer material according to any preceding claim wherein a or each facing layer is biodegradable.

8. Multilayer material according to any preceding claim wherein a or each facing layer comprises a thin film encapsulating the foam core.

9. Multilayer material according to any preceding claim wherein a or each facing layer is a paper such as corrugated cardboard.

10. Multilayer material according to any preceding claim wherein a or each facing layer comprises a biodegradable polymeric material.

11. Multilayer material according to any preceding claim wherein the facing layer or layers comprise a water resistant coating.

12. Multilayer material according to any preceding claim which has a thermal conductivity of <0.035W/mK.

13. A thermal insulation material comprising the multilayer material of any preceding claim.

14. Use of the multilayer material of any of claims 1 to 15 in the thermal insulation of an object.

15. A method of thermally insulating an object using the multilayer material of any of claims 1 to 12.

16. A method of making a multilayer material comprising:
a) forming a core of foamed starch;
b) compressing the foamed starch core; and
c) bonding a facing layer to a surface of the foamed starch core.

17. A method according to claim 16 in which the formed starch core comprises formed starch pieces such as foamed starch loose-fill.

18. A method according to claim 16 or 17 further comprising the step of applying a bonding agent to the pieces of foamed starch.

19. A method according to claim 18 wherein the bonding agent is a liquid such as water.

20. A method according to claim 18 or 19 wherein the bonding agent is applied in a mist chamber.

21. A method according to any of claims 16 to 20 further comprising forming the foamed starch by extrusion.

22. A method according to any of claims 16 to 21 comprising bonding facing layers to opposing surfaces of the foam core.

23. A method according to any of claims 16 to 22 wherein the facing layer or layers are positioned at the surface of the foam core prior to compression.

24. A method according to any of claims 16 to 23 wherein the compression is applied using a hydraulic press or at least one roller.

25. A method according to any of claims 16 to 24 further comprising applying a water-resistant coating to the facing layer or layers.

26. A method according to any of claims 16 to 25 wherein the compression takes place in a mould cavity to form a shaped body of multilayer material.

27. Apparatus for making a multilayer material comprising:
a first station for supplying foamed starch pieces to a transport surface; a second station, downstream of the first station, for applying a bonding agent to the surfaces of the foamed starch pieces;
means for compressing the foamed starch pieces downstream of the second station; and
means for bonding a facing layer to at least one surface of the compressed foamed starch.

28. Apparatus according to claim 27 wherein the second station comprises a mist chamber.

29. Apparatus according to claim 26 or 27 wherein the means for compressing the foamed starch pieces comprises at least one roller or a hydraulic plate press.
